# EUROPÄISCHE PATENTSCHRIFT

(11) **EP 1 341 294 B1**
(45) Veröffentlichungstag und Bekanntmachung des Hinweises auf die Patenterteilung: **08.08.2007**
(21) Anmeldenummer: 02020281.8
(22) Anmeldetag: 11.09.2002
(51) Int. Cl.: H02P 7/00, H02M 3/157

(54) **Verfahren und Steuereinheit zur Ansteuerung einer Steuerschaltung**
Method and control unit for driving a control circuit
Méthode et unité de commande pour alimenter un circuit de commande

(30) Priorität: 27.02.2002 DE 10208616
(43) Veröffentlichungstag der Anmeldung: 03.09.2003
(73) Patentinhaber: ROBERT BOSCH GMBH, 70442 Stuttgart (DE)
(72) Erfinder: Grossmann, Alex, 76593 Gernsbach (DE); Baumann, Torsten, 75031 Eppingen-Adelshofen (DE)

(56) Entgegenhaltungen:
- EP-A- 1 166 943
- US-A- 5 719 759
- US-A1- 2002 005 706
- US-B1- 6 333 617

## Beschreibung

### Stand der Technik

Die Erfindung geht von einem Verfahren und von einer Steuereinheit zur Ansteuerung einer Steuerschaltung nach der Gattung der unabhängigen Ansprüche aus.

Es sind bereits Steuerschaltungen bekannt, die zwei Ausgänge zum Ansteuern einer Komponente, insbesondere eines Kraftfahrzeugs, umfassen. Die Komponente kann beispielsweise als Drosselklappensteller, als Abgasregelungssteller, als Ladungsbewegungsklappensteller, als Umluftsteller bei Kompressormotoren, als variabler Ventiltrieb-Verstellung, oder dergleichen ausgebildet sein. Jeder Ausgang der Steuerschaltung ist dabei über ein steuerbares Schaltmittel wahlweise mit einem Betriebsspannungspotential oder einem Bezugspotential verbindbar. Eine Ansteuerspannung für die Komponente wird aus einer Differenz zwischen den Potentialen an den beiden Ausgängen gebildet. Eine solche Steuerschaltung kann beispielsweise durch eine sogenannte H-Brückenschaltung realisiert werden, wie sie beispielsweise von Motorola als Automotive H-Bridge Driver MC 33186, bekannt ist. Dabei werden zum Ansteuern der Steuerschaltung üblicherweise zwei Eingangssignale verwendet, nämlich ein pulsweitenmoduliertes Signal für einen ersten Eingang der Steuerschaltung und ein konstantes Vorzeichensignal für einen zweiten Eingang der Steuerschaltung.

Mittels der bekannten H-Brückenschaltung ist es möglich, die Komponente in beiden möglichen Drehrichtungen anzusteuern. Dabei ist die H-Brückenschaltung entweder diskret aufgebaut oder in einen integrierten Schaltkreis integriert. Da die Stellströme für die Komponente üblicherweise zwischen 1A und mehr als 100A liegen, ist die an der H-Brückenschaltung erzeugte Verlustleistung in zweierlei Hinsicht kritisch. Zum einen muss die Steuerschaltung die Verlustleistung sehr gut nach außen abführen können. Zum anderen besitzen hoch integrierte Steuerschaltungen insbesondere mit flächenoptimierten Transistoren als steuerbares Schaltmittel nur noch sehr wenig Wärmekapazität, um kurzzeitige hohe Lasten verkraften zu können.

In beiden Fällen ist es wünschenswert, die Verlustleistung in der Steuerschaltung bzw. auf dem integrierten Schaltkreis gleichmäßig zu verteilen. Ist die Steuerschaltung bzw. die H-Brückenschaltung diskret aufgebaut, so ist es wünschenswert, die entstehende Verlustleistung gleichmäßig auf die einzelnen steuerbaren Schaltmittel zu verteilen.

Aus der Druckschrift US 2002/0005706 A1 ist ein H-Brückenmotorsteuerschaltkreis bekannt, der 4 MOS-Transistoren umfasst und bei dem zwischen die beiden Ausgänge ein Motor geklemmt ist. Gemäß dieser Druckschrift werden dabei die beiden Ausgänge gleichzeitig mit einem periodisch getakteten Signal versorgt.

Die Druckschrift EP 1166943 A2 offenbart eine Vorrichtung zur Leistungsversorgung für Widerstandsschweißen. Dabei wird in einer ersten Schweißperiode T1 ein positiver Strom und in einer zweiten Schweißperiode T2 ein negativer Strom erzeugt. Zwischen den beiden Perioden T1 und T2 ist eine Schaltpause angeordnet.

### Vorteile der Erfindung

Das erfindungsgemäße Verfahren und die erfindungsgemäße Steuereinheit zur Ansteuerung einer Steuerschaltung mit den Merkmalen der unabhängigen Ansprüche haben demgegenüber den Vorteil, dass die Schaltmittel (20, 25; 30, 35) derart angesteuert werden, dass in einem ersten Betriebsmodus nur bei einem ersten steuerbaren Schaltmittel (20, 25) Schaltungsvorgänge stattfinden, wohingegen bei einem zweiten Betriebsmodus Schaltungsvorgänge nur bei einem zweiten steuerbaren Schaltmittel (30, 35) stattfinden, und dass periodisch zwischen den beiden Betriebsmodi umgeschaltet wird, so dass für eine Ansteuerspannung (UA) mit gleichbleibendem Vorzeichen abwechselnd an einem der beiden Ausgänge (5, 10) ein periodisch getaktetes Signal und am anderen der beiden Ausgänge gleichzeitig ein konstantes nicht getaktetes Signal erzeugt wird. Auf diese Weise lässt sich die bei der Ansteuerung der Komponente in der Steuerschaltung erzeugte Verlustleistung besser auf die vorhandenen steuerbaren Schaltmittel verteilen und dadurch besser und schneller nach außen abführen. Somit kann eine zu starke Erhitzung eines einzelnen der steuerbaren Schaltmittel vermieden und dadurch eine Zerstörung dieses Schaltmittels verhindert werden. Durch die verbesserte Wärmeverteilung und damit geringere Erwärmung der einzelnen Schaltmittel lässt sich außerdem eine höhere Schaltfrequenz realisieren, ohne dass dies zu einer kritischen Erwärmung und ggf. Zerstörung einzelner Schaltmittel führt. Die Wärme kann besser abgeführt werden, da sie über mehrere steuerbare Schaltmittel und damit eine größere Fläche verteilt auftritt. Die Steuerschaltung kann dadurch robuster realisiert werden. außerdem können Kosten gespart werden, da die Wärmeabfuhr für die Steuerschaltung einfacher realisiert werden kann. Durch eine höhere realisierbare Schaltfrequenz der einzelnen steuerbaren Schaltmittel wird in der Regel die angeschlossene Komponente geschont, da es weniger Rütteleffekte gibt. Weiterhin erzeugt die angeschlossene Komponente dann ein geringeres Geräuschniveau, so dass der Komfort für den Fahrer eines Kraftfahrzeugs erhöht wird, wenn es sich bei der Komponente um eine Komponente des Kraftfahrzeugs handelt.

Durch die in den Unteransprüchen aufgeführten Maßnahmen sind vorteilhafte Weiterbildungen und Verbesserungen des Verfahrens und der Steuereinheit zur Ansteuerung einer Steuerschaltung gemäß den unabhängigen Ansprüchen möglich.

Besonders vorteilhaft ist es, wenn die beiden Ausgänge über die steuerbaren Schaltmittel jeweils abwechselnd mit einem von zwei Potentialen, vorzugsweise mit einem Betriebsspannungspotential oder einem Bezugspotential, verbunden werden. Auf diese Weise werden die Schaltvorgänge gleichmäßig auf die steuerbaren Schaltmittel verteilt, so dass die bei den Schaltvorgängen entstehende Verlustleistung ebenfalls gleichmäßig auf diese Schaltmittel verteilt wird. Die Wärmeabführung lässt sich auf diese Weise optimieren.

Die Schaltmittel werden erfindungsgemäß derart angesteuert werden, dass an beiden Ausgängen abwechselnd ein periodisches Signal erzeugt wird. Entsprechend liegen an den Ausgängen der Steuereinheit die Schaltsignale abwechselnd periodisch an. Auf diese Weise lassen sich die beiden Ausgänge der Steuereinheit abwechselnd in zwei verschiedenen Betriebsmodi betreiben, die softwaremäßig umgeschaltet werden können. Dadurch wird die Hardware der Steuereinheit entlastet.

### Zeichnung

Ausführungsbeispiele der Erfindung sind in den Zeichnungen dargestellt und in der nachfolgenden Beschreibung näher erläutert. Es zeigen Figur 1 ein Blockschaltbild einer erfindungsgemäßen Steuereinheit mit angegchlossener Steuerschaltung und Komponente, Figur 2 einen weiteren Signalverlauf an den Ausgängen der Steuerschaltung, Figur 3 einen Signalverlauf an den Ausgängen der Steuerschaltung gemäß der Erfindung und Figur 4 einen sich ergebenden Signalverlauf für eine Ansteuerspannung der angeschlossenen Komponente.

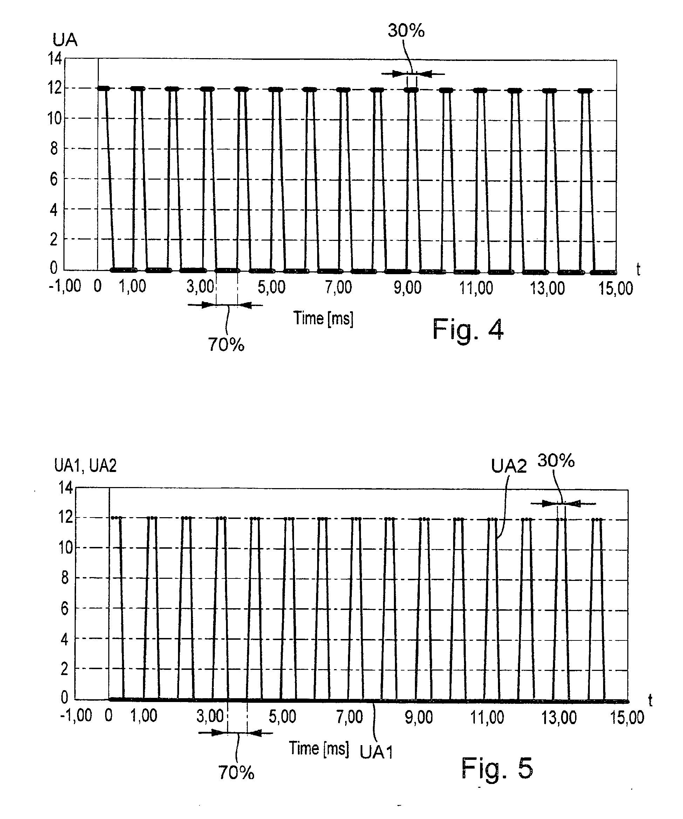

Figur 5 zeigt einen Signalverlauf an den Ausgängen der Steuerschaltung für eine herkömmliche Ansteuerung.

### Beschreibung der Ausführungsbeispiele

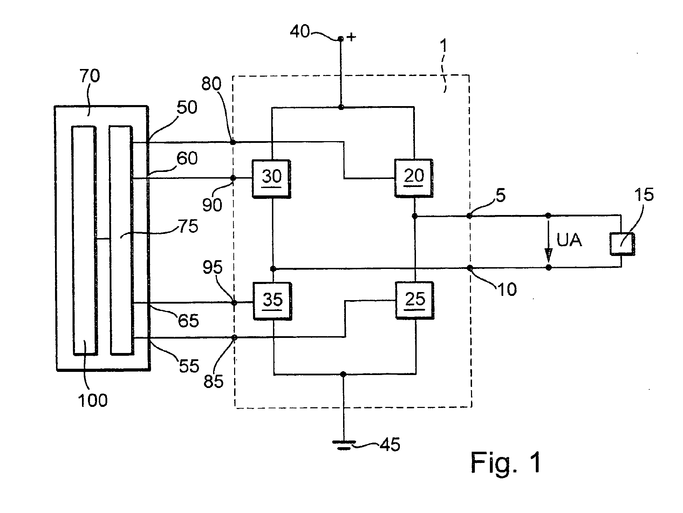

In Figur 1 kennzeichnet 1 eine Steuerschaltung, die in diesem Beispiel als H-Brückenschaltung ausgebildet ist. Sie umfasst einen ersten Ausgang 5 und einen zweiten Ausgang 10 zum Anschluss einer Komponente 15. Bei der Komponente 15 kann es sich beispielsweise um die Komponente eines Kraftfahrzeugs handeln. Dabei kann die Komponente 15 beispielsweise als Gleichstrommotor eines Drosselklappenstellers, einen Abgasregelungsstellers, eines Ladungsbewegungsklappenstellers, eines Umluftstellers bei Kompressormotoren, einer Verstellung eines variablen Ventiltriebs, oder dergleichen ausgebildet sein. Der erste Ausgang 5 ist über ein erstes steuerbares Schaltmittel 20, 25 mit einem Betriebsspannungspotential 40 oder einem Bezugspotential 45 verbindbar. Der zweite Ausgang 10 ist über ein zweites gesteuertes Schaltmittel 30, 35 mit dem Betriebsspannungspotential 40 oder dem Bezugspotential 45 verbindbar. Die ersten steuerbaren Schaltmittel umfassen in diesem Beispiel einen ersten gesteuerten Schalter 20 und einen zweiten gesteuerten Schalter 25. Über den ersten gesteuerten Schalter 20 ist der erste Ausgang 5 mit dem Betriebsspannungspotential 40 und über den zweiten gesteuerten Schalter 25 mit dem Bezugspotential 45 verbindbar. Die zweiten steuerbaren Schaltmittel 30, 35 umfassen einen dritten gesteuerten Schalter 30 und einen vierten gesteuerten Schalter 35. Der zweite Ausgang 10 ist über den dritten gesteuerten Schalter 30 mit dem Betriebsspannungspotential 40 und über den vierten gesteuerten Schalter 35 mit dem Bezugspotential 45 verbindbar. Die gesteuerten Schalter 20, 25, 30, 35 können beispielsweise jeweils als Leistungs-Transistor oder Thyristor ausgebildet sein. Das erste steuerbare Schaltmittel 20, 25 ist über einen ersten Eingang 80, 85 der Steuerschaltung 1 ansteuerbar. Dabei umfasst der erste Eingang 80, 85 einen ersten Eingangsanschluss 80 zur Ansteuerung des ersten gesteuerten Schalters 20 und einen zweiten Eingangsanschluss 85 zur Ansteuerung des zweiten gesteuerten Schalters 25. Das zweite steuerbare Schaltmittel 30, 35 wird über einen zweiten Eingang 90, 95 der Steuerschaltung 1 angesteuert. Dabei umfasst der zweite Eingang 90, 95 einen dritten Eingangsanschluss 90 zur Ansteuerung des dritten gesteuerten Schalters 30 und einen vierten Eingangsanschluss 95 zur Ansteuerung des vierten gesteuerten Schalters 35. Der erste Eingang 80, 85 der Steuerschaltung 1 ist mit einem ersten Ausgang 50, 55 einer Steuereinheit 70 verbunden. Der erste Ausgang 50, 55 der Steuereinheit 70 umfasst dabei einen ersten Ausgangsanschluss 50, der mit dem ersten Eingangsanschluss 80 der Steuerschaltung 1 verbunden ist, und einen zweiten Ausgangsanschluss 55, der mit dem zweiten Eingangsanschluss 85 der Steuerschaltung 1 verbunden ist. Der zweite Eingang 90, 95 der Steuerschaltung 1 ist mit einem zweiten Ausgang 60, 65 der Steuereinheit 70 verbunden. Der zweite Ausgang 60, 65 der Steuereinheit 70 umfasst einen dritten Ausgangsanschluss 60, der mit dem dritten Eingangsanschluss 90 der Steuerschaltung 1 verbunden ist, und einen vierten Ausgangsanschluss 65, der mit dem vierten Eingangsanschluss 95 der Steuerschaltung 1 verbunden ist. Die Steuereinheit 70 umfasst Mittel 75 zur Erzeugung von Steuersignalen an den beiden Ausgängen 50, 55; 60, 65. Die Mittel 75 können als Prozessor der Steuereinheit 70 ausgebildet sein. Zusätzlich und optional können die Mittel 75 mit einem Softwareprogramm 100 zusammenwirken.

Durch Differenz zwischen dem Potential am ersten Ausgang 5 und dem Potential am zweiten Ausgang 10 der Steuerschaltung 1 ergibt sich eine Ansteuerspannung UA für die Komponente 15. Je nach Vorzeichen der Ansteuerspannung UA ergibt sich eine unterschiedliche Drehrichtung für eine als Gleichstrommotor ausgebildete Komponente. In der einen Drehrichtung werden der zweite gesteuerte Schalter 25 und der dritte gesteuerte Schalter 30 durchgeschaltet, in der anderen Drehrichtung werden der erste gesteuerte Schalter 20 und der vierte gesteuerte Schalter 35 durchgeschaltet. Eine Leistungssteuerung der Komponente 15 lässt sich über eine Ansteuertastrate realisieren, in dem z.B. der dritte Transistor 30 ständig durchgeschaltet ist und der zweite Transistor 25 nur getaktet angesteuert wird. Alternativ kann derselbe Effekt erzielt werden, wenn der zweite Transistor 25 ständig durchgeschaltet ist und der dritte Transistor 30 nur getaktet angesteuert wird. Eine auf diese Weise realisierte getaktete Ansteuerspannung UA ist beispielsweise im Signaldiagramm gemäß Figur 4 über der Zeit t aufgetragen. Die Ansteuertastrate beträgt dabei beispielhaft 30%. Die Taktfrequenz der Ansteuerspannung UA kann beispielsweise im Bereich von 1 kHz liegen, was einer Periodendauer von 1 ms entspricht. Bei Ansteuertaktfrequenzen, die beispielsweise größer oder gleich 500 Hz sind, lässt sich für die Komponente 15 eine Geräuschreduzierung realisieren, vor allem wenn die Komponente 15 wie in diesem Beispiel als Gleichstrommotor ausgebildet ist. Zur Realisierung dieser Ansteuertaktfrequenzen sind entsprechende Schaltfrequenzen ≥500 Hz des oder der getaktet angesteuerten gesteuerten Schalter erforderlich. Verluste während den Schaltvorgängen des oder der getaktet angesteuerten gesteuerten Schalter führen zur Erwärmung. Diese Verluste können dann nicht durch Optimierung, d.h. Verkürzung der Schaltzeiten des oder der getaktet angesteuerten gesteuerten Schalter minimiert werden, wenn durch die kurzen Schaltzeiten bei hohen zu schaltenden Strömen hochfrequente Störsignale erzeugt werden und diese zu Problemen hinsichtlich der elektromagnetischen Verträglichkeit, beispielsweise in einem Fahrzeug, führen.

Die durch die zur Erzielung der getakteten Ansteuerspannung UA erforderlichen Schaltvorgänge in der Steuerschaltung 1 werden erfindungsgemäß auf mehr als einen der gesteuerten Schalter 20, 25, 30, 35 verteilt, um eine gleichmäßige Verteilung der erzeugten Verlustleistung zu erzielen.

Bei einer herkömmlichen Ansteuerung der Steuerschaltung 1 durch die Steuereinheit 70 wird der erste Eingang 80, 85 von der Steuereinheit 70 auf "Low" gesetzt, d.h. am zweiten Eingangsanschluss 85 liegt ein Steuersignal zum ständigen Durchschalten des zweiten gesteuerten Schalters 25 an. Am ersten Eingangsanschluss 80 liegt kein Steuersignal an, so dass der erste gesteuerte Schalter 20 ständig gesperrt ist. Somit ergibt sich am ersten Ausgang 5 ein erstes Ausgangssignal UA1 = 0 wie in Figur 5 dargestellt. Der erste Ausgang 5 ist somit ebenfalls "Low". Der zweite Eingang 90, 95 wird von der Steuereinheit 70 mit einer Ansteuertastrate von 30% angesteuert. Während den Ansteuerimpulsen ist dabei der erste Eingang 90, 95 auf "High" geschaltet, d.h. am dritten Eingangsanschluss 90 liegt ein Steuersignal zum Durchschalten des dritten gesteuerten Schalters 30 an, während am vierten Eingangsanschluss 95 kein Steuersignal anliegt, so dass der vierte gesteuerte Schalter 35 sperrt. In den Impulspausen ist der zweite Eingang 90, 95 entsprechend auf "Low" geschaltet, so dass am ersten Eingangsanschluss 90 kein Steuersignal anliegt, so dass der dritte gesteuerte Schalter 30 sperrt. Am vierten Eingangsanschluss 95 liegt dann ein Steuersignal an, das den vierten gesteuerten Schalter 35 durchschaltet. Somit ergibt sich am zweiten Ausgang 10 ein zweites Ausgangssignal UA2, das im wesentlichen dem logischen Zustand am zweiten Eingang 90, 95 entspricht und die gewünschte Ansteuertastrate von 30% aufweist. Die Differenz zwischen dem zweiten Ausgangssignal UA2 und dem ersten Ausgangssignal UA1 ergibt dann die vorgegebene Ansteuerspannung UA gemäß Figur 4.

Bei dieser herkömmlichen Ansteuerung treten sämtliche Verluste am zweiten steuerbaren Schaltmittel 30, 35 auf, wohingegen beim ersten steuerbaren Schaltmittel 20, 25 keine Schaltvorgänge stattfinden. Die durch die Schaltvorgänge erzeugte Wärme ist somit nicht gleichmäßig auf beide steuerbaren Schaltmittel der Steuerschaltung 1 verteilt. Die zweiten steuerbaren Schaltmittel 30, 35 erzeugen also mehr Verlustleistung als die ersten steuerbaren Schaltmittel 20, 25.

Die logischen Schaltzustände an den beiden Eingängen 80, 85; 90, 95 der Steuerschaltung 1 werden vom Prozessor 75 der Steuereinheit 70 erzeugt.

Der Prozessor 75 kann nun so eingestellt sein, dass sowohl der erste Eingang 80, 85 als auch der zweite Eingang 90, 95 getaktet angesteuert werden. Dabei beträgt in beiden Fällen die Taktfrequenz 500 Hz, d.h. die Periodendauer beträgt 2 ms. Der erste Eingang 80, 85 wird dabei mit einer Ansteuertastrate von 35% angesteuert. Das Verhältnis zwischen Impuls und Impulspause beträgt somit 35 zu 65. Zur Erzeugung der Impulse ist dabei der erste Eingang 80, 85 auf "High" geschaltet. Dabei liegt am ersten Eingangsanschluss 80 ein Steuersignal an, das den ersten gesteuerten Schalter 20 durchschaltet und somit den ersten Ausgang 5 mit dem Betriebsspannungspotential 40 verbindet. Der zweite Eingangsanschluss 85 weist dabei dann kein Schaltsignal auf, so dass der zweite gesteuerte Schalter 25 gesperrt ist. In den Impulspausen liegt der erste Eingang 80,85 auf "Low". Dabei liegt am ersten Eingangsanschluss 80 kein Steuersignal, so dass der erste gesteuerte Schalter 20 gesperrt ist. Beim zweiten Eingangsanschluss 85 liegt dann ein Steuersignal an, so dass der zweite gesteuerte Schalter 25 durchschaltet und den ersten Ausgang 5 mit dem Bezugspotential 45 verbindet.

Der zweite Eingang 90, 95 wird bei dieser Realisierungsform mit einer zweiten Ansteuertastrate von 65% vom Prozessor 75 angesteuert. Das Verhältnis zwischen Impuls und Impulspause beträgt dann 65 zu 35. Während der Impulse liegt dabei der zweite Eingang 90, 95 auf "High". Dabei liegt am dritten Eingangsanschluss 90 ein Steuersignal an, das den dritten gesteuerten Schalter 30 durchschaltet und damit den zweiten Ausgang 10 mit dem Betriebsspannungspotential 40 verbindet. Am vierten Eingangsanschluss 95 liegt dann kein Schaltsignal an, so dass der vierte gesteuerte Schalter 35 sperrt. In den Impulspausen liegt dann der zweite Eingang 90, 95 auf "Low". Dabei liegt dann am dritten Eingangsanschluss 90 kein Steuersignal an, so dass der dritte gesteuerte Schalter 30 sperrt. Am vierten Eingangsanschluss 95 liegt dann ein Steuersignal an, das den vierten gesteuerten Schalter 35 durchschaltet und den zweiten Ausgang 10 mit dem Bezugspotential 45 verbindet.

Dabei sind die beiden Eingänge 80, 85; 90, 95 derart synchron vom Prozessor 75 angesteuert, dass die Symmetrieachsen der Impulse und Impulspausen am ersten Eingang 80, 85 mit den Symmetrieachsen der Impulse und Impulspausen am zweiten Eingang 90, 95 zusammenfallen.

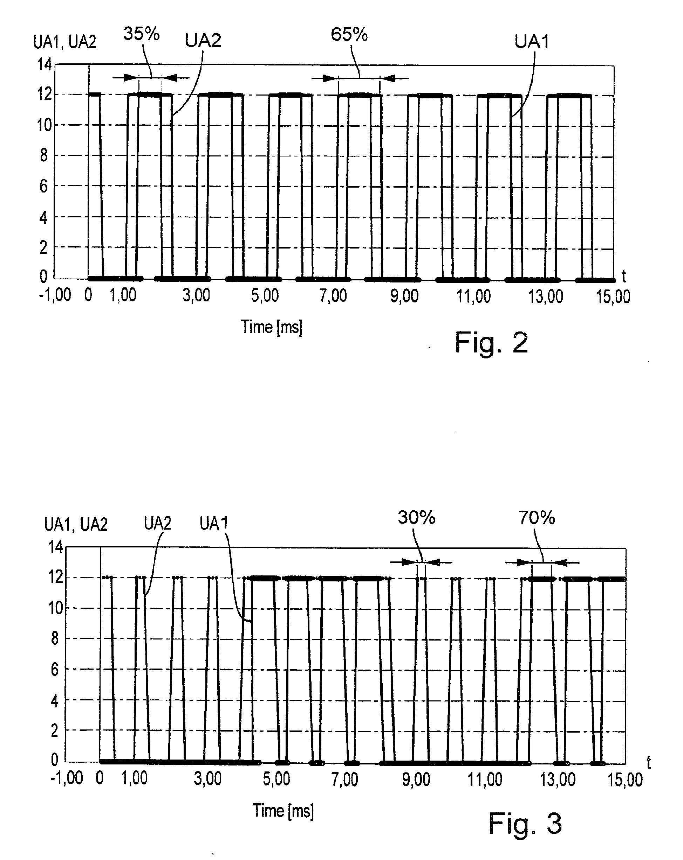

Entsprechend dem Ansteuersignal am ersten Eingang 80, 85 ergibt sich beim ersten Ausgang 5 das erste Ausgangssignal UA1 mit der Frequenz 500 Hz und der Ansteuertastrate von 35%. Entsprechend den Ansteuersignalen am zweiten Eingang 90, 95 ergibt sich am zweiten Ausgang 10 das zweite Ausgangssignal UA2 mit der Frequenz von 500 Hz und der Ansteuertastrate von 65%. Auch die beiden Ausgangssignale UA1, UA2 weisen dabei die für die Eingangssignale beschriebenen zusammenfallenden Symmetrieachsen auf. Die beiden Ausgangssignale UA1, UA2 sind im Signaldiagramm nach Figur 2 dargestellt. Bildet man die Differenz UA2 - UA1 aus den beiden periodischen Ausgangssignalen UA1, UA2, so ergibt sich wieder die in Figur 4 dargestellte, vorgegebene Ansteuerspannung UA mit der Frequenz 1 kHz und der Ansteuertastrate von 30%. Bei dieser Realisierungsform werden jedoch beide steuerbaren Schaltmittel 20, 25; 30, 35 abwechselnd geschaltet, so dass sich die erzeugte Verlustleistung und damit Erwärmung über beide steuerbaren Schaltmittel 20, 25; 30, 35, ja sogar über sämtliche gesteuerten Schalter 20, 25; 30, 35 verteilt. Wenn die Schaltzeiten bei beiden steuerbaren Schaltmitteln 20, 25; 30, 35 identisch sind, wird bei beiden steuerbaren Schaltmitteln 20, 25; 30, 35 die gleiche Verlustleistung erzeugt. Wenn die Schaltzeiten der vier gesteuerten Schalter 20, 25; 30, 35 identisch sind, wird bei allen vier gesteuerten Schaltern 20, 25; 30, 35 die gleiche Verlustleistung erzeugt.

Gemäß der Erfindung ist der Prozessor 75 so eingestellt, dass er am ersten Eingang 80, 85 ein Ansteuersignal mit einer Ansteuertastrate von 70% und einer Frequenz von 1 kHz erzeugt. Dieses Ansteuersignal für den ersten Eingang 80, 85 wird in einem ersten Betriebsmodus vom Prozessor 75 erzeugt. In diesem ersten Betriebsmodus wird der zweite Eingang 90, 95 ständig auf "High" gehalten. Somit ergibt sich am ersten Ausgang 5 entsprechend dem Ansteuersignal am ersten Eingang 80, 85 das erste Ausgangssignal UA1 mit einer Ansteuertastrate von 70%, wohingegen das zweite Ausgangssignal UA2 am zweiten Ausgang 10 ständig auf "High" liegt. In der Differenz UA2 - UA1 der beiden Ausgangssignale UA1, UA2 ergibt sich dann wiederum die vorgegebene Ansteuerspannung UA mit einer Ansteuertastrate von 30% und eine Frequenz von 1 kHz. In einem zweiten Betriebsmodus erzeugt der Prozessor 75 am zweiten Eingang 90, 95 ein Ansteuersignal, das eine Ansteuertastrate von 30% bei einer Frequenz von 1 kHz aufweist. Gleichzeitig wird der erste Eingang 80, 85 auf "Low" gesetzt. Dieser zweite Betriebsmodus entspricht dem oben beschriebenen herkömmlichen Betrieb der Steuerschaltung
1. Entsprechend ergibt sich am ersten Ausgang 5 das erste Ausgangssignal UA1 = 0, beziehungsweise weist das erste Ausgangssignal UA1 ebenfalls das "Low"-Niveau auf. Der zweite Ausgang 10 weist dann die zweite Ausgangsspannung UA2 entsprechend dem Ansteuersignal am zweiten Eingang 90, 95 auf und weist eine Ansteuertastrate von 30% bei einer Frequenz von 1 kHz auf. Die Differenz UA2 - UA1 führt dann wieder zu der vorgegebenen Ansteuerspannung UA gemäß Figur 4 mit einer Ansteuertastrate von 30% und einer Frequenz von 1 kHz.

Im ersten Betriebsmodus finden nur beim ersten steuerbaren Schaltmittel 20, 25 Schaltungvorgänge statt, wohingegen beim zweiten Betriebsmodus Schaltungvorgänge nur beim zweiten steuerbaren Schaltmittel 30, 35 stattfinden.

Bei der Erfindung ist es nun vorgesehen, dass das Softwareprogramm 100 den Prozessor 75 periodisch zwischen den beiden Betriebsmodi umschaltet, wie dies in Figur 3 dargestellt ist. Gemäß Figur 3 findet eine Umschaltung zwischen den beiden Betriebsmodi jeweils nach vier Periodendauern statt. Auf diese Weise wird zum einen die vorgegebene Ansteuerspannung UA gemäß Figur 4 realisiert und zum anderen ebenfalls eine gleichmäßige Verteilung der Schaltvorgänge zwischen den beiden steuerbaren Schaltmitteln 20, 25; 30, 35 und damit eine gleichmäßige Verteilung der Verlustleistung in der ersten Steuerschaltung 1 erzielt. Durch die softwarebedingte Umschaltung des Prozessors 75 wird der Prozessor 75 entlastet. Alternativ kann der Prozessor 75 auch so eingestellt sein, dass er automatisch, d.h., ohne Veranlassung durch ein Softwareprogramm diese Umschaltung realisiert.

Die gemachten Ausführungen gelten entsprechend für eine Umkehrung der Drehrichtung, wenn die Komponente 15 als Gleichstrommotor ausgebildet ist, wobei dann lediglich die Rollen der beiden Ausgangssignale UA1, UA2 vertauscht werden, so dass sich das Vorzeichen der Ansteuerspannung UA verändert. Bezogen auf die Eingänge 80, 85; 90, 95 der Steuerschaltung 1 heißt dies, dass der erste Eingang 80, 85 die oben beschriebene Funktion des zweiten Eingangs 90, 95 übernimmt und mit den Signalen vom Prozessor 75 angesteuert wird, die zuvor für den zweiten Eingang 90, 95 beschrieben wurden. Umgekehrt übernimmt der zweite Eingang 90, 95 in diesem Fall die oben beschriebene Funktion des ersten Eingangs 80, 85, wobei die zuvor für den ersten Eingang 80, 85 vorgesehenen Ansteuersignale des Prozessors 75 nun für den zweiten Eingang 90, 95 vorgesehen sind.

Für die vorgegebene Ansteuerspannung UA kann auch eine andere Ansteuertastrate als 30% oder eine andere Frequenz als 1 kHz vorgegeben sein, wobei dann auch die Ansteuertastraten an den beiden Eingängen 80, 85; 90, 95 entsprechend angepasst werden müssen. Mit zunehmender Ansteuertaktfrequenz wird die Taktfrequenz der gesteuerten Schalter 20, 25; 30, 35 erhöht und mehr Verlustleistung produziert, so dass die erfindungsgemäße gleichmäßige Verteilung der Verlustleistung mit zunehmender Taktfrequenz für eine gute Wärmeabführung wichtiger wird. Dies gilt vor allem für Ansteuertaktfrequenzen > 5 kHz für die Ansteuerspannung UA. Die erfindungsgemäße Verteilung der erzeugten Verlustleistung wird in der beschriebenen Weise durch Schalten mehr als eines der steuerbaren Schaltmittel 20, 25; 30, 35 realisiert.

## Patentansprüche

1. Verfahren zur Ansteuerung einer Steuerschaltung (1), wobei über mindestens zwei Ausgänge (5, 10) der Steuerschaltung (1) eine Komponente (15), insbesondere eines Kraftfahrzeugs, angesteuert wird, wobei jeder Ausgang (5, 10) über steuerbare Schaltmittel (20, 25; 30, 35) wahlweise mit jeweils einem von mehreren Potenzialen (40, 45) verbunden wird und wobei eine Ansteuerspannung (UA) für die Komponente (15) aus einer Differenz zwischen den Potenzialen an den beiden Ausgängen (5, 10) gebildet wird, wobei ein vorgegebener getakteter Verlauf der Ansteuerspannung (UA) durch Schalten mehr als eines der steuerbaren Schaltmittel (20, 25; 30, 35) eingestellt wird, **dadurch gekennzeichnet, dass** die Schaltmittel (20, 25; 30, 35) derart angesteuert werden, dass in einem ersten Betriebsmodus nur bei einem ersten steuerbaren Schaltmittel (20, 25) Schaltungsvorgänge stattfinden, wohingegen bei einem zweiten Betriebsmodus Schaltungsvorgänge nur bei einem zweiten steuerbaren Schaltmittel (30, 35) stattfinden, und dass periodisch zwischen den beiden Betriebsmodi umgeschaltet wird, so dass für eine Ansteuerspannung (UA) mit gleichbleidendem Vorzeichen abwechselnd an einem der beiden Ausgänge (5, 10) ein periodisch getaktetes Signal und am anderen der beiden Ausgänge gleichzeitig ein konstantes nicht getaktetes Signal erzeugt wird.

2. Verfahren nach Anspruch 1,**dadurch gekennzeichnet, dass** die beiden Ausgänge (5, 10) über die steuerbaren Schaltmittel (20, 25; 30, 35) jeweils abwechselnd mit einem von zwei Potenzialen (40, 45), vorzugsweise mit einem Betriebsspannungspotenzial oder einem Bezugspotenzial, verbunden werden.

3. Verfahren nach Anspruch 2, **dadurch gekennzeichnet, dass** ein erster Ausgang (5) über mindestens ein erstes Schaltmittel (20, 25) und ein zweiter Ausgang (10) über mindestens ein zweites Schaltmittel (30, 35) mit einem der beiden Potenziale (40, 45) verbunden wird.

4. Verfahren nach Anspruch 1, 2 oder 3, **dadurch gekennzeichnet, dass** die Schaltmittel (20, 25; 30, 35) periodisch mit gleicher Frequenz angesteuert werden, so dass an beiden Ausgängen (5, 10) jeweils ein periodisches Signal mit dieser Frequenz erzeugt wird.

5. Verfahren nach einem der vorherigen Ansprüche, **dadurch gekennzeichnet, dass** zum Schalten der steuerbaren Schaltmittel (20, 25; 30, 35) jeweils ein Schaltsignal an einem zugeordneten Ausgang (50, 55; 60, 65) einer Steuereinheit (70) erzeugt wird.

6. Steuereinheit (70) zur Ansteuerung einer Steuerschaltung (1) mit mindestens zwei Ausgängen (5, 10) zur Ansteuerung einer Komponente (15), insbesondere eines Kraftfahrzeugs, wobei jeder Ausgang (5, 10) über steuerbare Schaltmittel (20, 25; 30, 35) wahlweise mit jeweils einem von mehreren Potenzialen (40, 45) verbindbar ist und wobei die Komponente (15) an die beiden Ausgänge (5, 10) anschließbar ist, so dass sich eine Ansteuerspannung (UA) für die Komponente (15) aus einer Differenz zwischen den Potenzialen an den beiden Ausgängen (5, 10) ergibt, wobei Mittel (75) zur Erzeugung von Steuersignalen für die Schaltmittel (20, 25; 30, 35) vorgesehen sind, die in Abhängigkeit eines vorgegebenen getakteten Verlaufs der Ansteuerspannung (UA) Steuersignale zum Schalten mehr als eines der steuerbaren Schaltmittel (20, 25; 30, 35) erzeugen, **dadurch gekennzeichnet, dass** die Ansteuerung der Schaltmittel (20, 25; 30, 35) derart erfolgt, dass in einem ersten Betriebsmodus nur bei einem ersten steuerbaren Schaltmittel (20, 25) Schaltungsvorgänge stattfinden, wohingegen bei einem zweiten Betriebsmodus Schaltungsvorgänge nur bei einem zweiten steuerbaren Schaltmittel (30, 35) stattfinden, und dass Mittel (100) vorgesehen sind, die periodisch zwischen den beiden Betriebsmodi umschalten, so dass für eine Ansteuerspannung (UA) mit gleichbleibendem Vorzeichen abwechselnd an einem der beiden Ausgänge (5, 10) ein periodisch getaktetes Signal und am anderen der beiden Ausgänge gleichzeitig ein konstantes nicht getaktetes Signal erzeugt wird.

7. Steuereinheit (70) nach Anspruch 6, **dadurch gekennzeichnet, dass** ein erster Ausgang (50, 55) der Steuereinheit (70) zur Ansteuerung mindestens eines ersten Schaltmittels (20, 25) der Steuerschaltung (1) vorgesehen ist, wobei ein erster Ausgang (5) der Steuerschaltung (1) über das erste Schaltmittel (20, 25) mit einem von zwei Potenzialen (40, 45) verbindbar ist und dass ein zweiter Ausgang (60, 65) der Steuereinheit (70) zur Ansteuerung mindestens eines zweiten Schaltmittels (30, 35) der Steuerschaltung (1) vorgesehen ist, wobei ein zweiter Ausgang (10) der Steuerschaltung (1) über das zweite Schaltmittel (30, 35) ebenfalls mit einem von den beiden Potenzialen (40, 45) verbindbar ist.

8. Steuereinheit nach Anspruch 7, **dadurch gekennzeichnet, dass** zur Erzeugung des vorgegebenen getakteten Verlaufs der Ansteuerspannung (UA) der Steuerschaltung (1) für die Komponente (15) sowohl am ersten Ausgang (50, 55) der Steuereinheit (70) als auch am zweiten Ausgang (60, 65) der Steuereinheit (70) jeweils Schaltsignale zum Umschalten des zugeordneten Schaltmittels (20, 25; 30, 35) anliegen.

## Claims

1. Method for driving a control circuit (1), with one component (15), in particular of a motor vehicle, being driven via at least two outputs (5, 10) of the control circuit (1), with each output (5, 10) optionally being connected to in each case one of a plurality of potentials (40, 45) via controllable switching means (20, 25; 30, 35), and with a drive voltage (UA) for the component (15) being formed from a difference between the potentials at the two outputs (5, 10), with a prespecified clocked profile of the drive voltage (UA) being set by switching more than one of the controllable switching means (20, 25; 30, 35), **characterized in that** the switching means (20, 25; 30, 35) are driven in such a way that in a first operating mode switching operations take place only at a first controllable switching means (20, 25), whereas in a second operating mode switching operations take place only at a second controllable switching means (30, 35), and **in that** a switchover is periodically made between the two operating modes, with the result that, for a drive voltage (UA) with a constant sign, a periodically clocked signal is alternately generated at one of the two outputs (5, 10) and at the same time a constant unclocked signal is generated at the other of the two outputs.

2. Method according to Claim 1, **characterized in that** the two outputs (5, 10) are in each case alternately connected to one of two potentials (40, 45), preferably to an operating voltage potential or to a reference potential, via the controllable switching means (20, 25; 30, 35).

3. Method according to Claim 2, **characterized in that** a first output (5) is connected to one of the two potentials (40, 45) via at least one first switching means (20, 25), and a second output (10) is connected to one of the two potentials (40, 45) via at least one second switching means (30, 35).

4. Method according to Claim 1, 2 or 3, **characterized in that** the switching means (20, 25; 30, 35) are periodically driven at the same frequency, with the result that a periodic signal with this frequency is generated at both outputs (5, 10) in each case.

5. Method according to one of the preceding claims, **characterized in that** a switching signal is in each case generated at an associated output (50, 55; 60, 65) of a control unit (70) in order to switch the controllable switching means (20, 25; 30, 35).

6. Control unit (70) for driving a control circuit (1) having at least two outputs (5, 10) for driving a component (15), in particular of a motor vehicle, it being possible to optionally connect each output (5, 10) to in each case one of a plurality of potentials (40, 45) via controllable switching means (20, 25; 30, 35), and it being possible to connect the component (15) to the two outputs (5, 10) so that a drive voltage (UA) for the component (15) is produced from a difference between the potentials at the two outputs (5, 10), with means (75) for generating control signals for the switching means (20, 25; 30, 35) being provided, which means (75) generate control signals for switching more than one of the controllable switching means (20, 25; 30, 35) as a function of a prespecified clocked profile of the drive voltage (UA), **characterized in that** the switching means (20, 25; 30, 35) are driven in such a way that in a first operating mode switching operations take place only at a first controllable switching means (20, 25), whereas in a second operating mode switching operations take place only at a second controllable switching means (30, 35), and **in that** means (100) are provided which periodically switch over between the two operating modes, with the result that, for a drive voltage (UA) with a constant sign, a periodically clocked signal is alternately generated at one of the two outputs (5, 10) and at the same time a constant unclocked signal is generated at the other of the two outputs.

7. Control unit (70) according to Claim 6, **characterized in that** a first output (50, 55) of the control unit (70) is provided for driving at least one first switching means (20, 25) of the control circuit (1), it being possible to connect a first output (5) of the control circuit (1) to one of two potentials (40, 45) via the first switching means (20, 25), and **in that** a second output (60, 65) of the control unit (70) is provided for driving at least one second switching means (30, 35) of the control circuit (1), it being possible to likewise connect a second output (10) of the control circuit (1) to one of the two potentials (40, 45) via the second switching means (30, 35).

8. Control unit according to Claim 7, **characterized in that** switching signals for switching over the associated switching means (20, 25; 30, 35) are in each case produced both at the first output (50, 55) of the control unit (70) and also at the second output (60, 65) of the control unit (70) in order to generate the prespecified clocked profile of the drive voltage (UA) of the control circuit (1) for the component (15).

## Revendications

1. Procédé de commande d'un circuit de commande (1), selon lequel on commande un composant (15) en particulier d'un véhicule automobile, par au moins deux sorties (5, 10) du circuit de commande (1), chaque sortie (5, 10) par des moyens de commutation (20, 25 ; 30, 35) commandables, respectivement au choix à l'un d'une pluralité de potentiels (40, 45), et en formant pour le composant (15) une tension de commande (UA) à partir d'une différence entre les potentiels sur les deux sorties (5, 10), avec une allure cadencée prédéfinie de la tension de commande (UA) réalisée en commutant plusieurs des moyens de commutation (20, 25 ; 30, 35) commandables,
**caractérisé en ce qu'**
on commande les moyens de commutation (20, 25 ; 30, 35) avec dans un premier mode de fonctionnement, des opérations de commutation uniquement sur un premier moyen de commutation (20, 25) commandable, mais par contre dans un deuxième mode de fonctionnement avec des opérations de commutation seulement sur un deuxième moyen de commutation (30, 35) commandable, et on effectue périodiquement, la commutation entre les deux modes de fonctionnement pour produire avec une tension de commande (UA) de signe constant, alternativement sur l'une des deux sorties (5, 10) un signal cadencé périodique et en même temps sur l'autre des deux sorties un signal constant non cadencé.

2. Procédé selon la revendication 1,
**caractérisé en ce que**
on relie les deux sorties (5, 10) par les moyens de commutation (20, 25; 30, 35) commandables respectivement de manière alternée avec un de deux potentiels (40, 45), de préférence avec un potentiel de tension de service ou un potentiel de référence.

3. Procédé selon la revendication 2,
**caractérisé en ce qu'**
on relie une première sortie (5) à l'un des deux potentiels (40, 45) par au moins un premier moyen de commutation (20, 25) et une deuxième sortie (10) par au moins un deuxième moyen de commutation (30, 35).

4. Procédé selon la revendication 1, 2 ou 3,
**caractérisé en ce que**
les moyens de commutation (20, 25 ; 30, 35) sont commandables périodiquement avec la même fréquence pour produire sur les deux sorties (5, 10) un signal périodique respectif à cette fréquence.

5. Procédé selon l'une des revendications précédentes, **caractérisé en ce que**
pour commuter les moyens de commutation (20, 25 ; 30, 35) commandables, un signal de commutation respectif est produit sur une sortie correspondante (50, 55 ; 60, 65) d'une unité de commande (70).

6. Unité de commande (70) pour commander un circuit de commande (1) avec aux moins deux sorties (5, 10) pour commander un composant (15), en particulier d'un véhicule automobile, dont chaque sortie (5, 10) peut être reliée par des moyens de commutation (20, 25 ; 30, 35) commandables, respectivement au choix à l'un d'une pluralité de potentiels (40, 45), et le composant (15) peut être connecté sur les deux sorties (5, 10), pour avoir sur le composant (15) une tension de commande (UA) à partir d'une différence entre les potentiels sur les deux sorties (5, 10), avec pour produire des signaux de commande des moyens de commutation (20, 25 ; 30, 35) des moyens (75) qui, en fonction d'une opération cadencée prédéfinie de la tension de commande (UA), génèrent des signaux de commande pour commuter plusieurs des moyens de commutation (20, 25 ; 30, 35) commandables,
**caractérisée en ce que**
la commande des moyens de commutation (20, 25 ; 30, 35) s'effectue dans un premier mode de fonctionnement avec des opérations de commutation uniquement sur un premier moyen de commutation (20, 25) commandable, et par contre dans un deuxième mode de fonctionnement avec des opérations de commutation seulement sur un deuxième moyen de commutation (30, 35) commandable et des moyens (100) effectuent périodiquement la commutation entre les deux modes de fonctionnement, pour générer de tension de commande (UA) avec un signe constant, par alternance sur l'une des deux sorties (5, 10) un signal cadencé périodique et en même temps sur l'autre des deux sorties un signal constant non cadencée.

7. Unité de commande (70) selon la revendication 6,
**caractérisée en ce qu'**
une première sortie (50, 55) de l'unité de commande (70) est prévue pour commander au moins un premier moyen de commutation (20, 25) du circuit de commande (1), en reliant une première sortie (5) du circuit de commande (1) à l'un de deux potentiels (40, 45) par le premier moyen de commutation (20, 25), et une deuxième sortie (60, 65) de l'unité de commande (70) est prévue pour commander au moins un deuxième moyen de commutation (30, 35) du circuit de commande (1), en reliant une deuxième sortie (10) du circuit de commande (1) également à l'un des deux potentiels (40, 45) par le deuxième moyen de commutation (30, 35).

8. Unité de commande selon la revendication 7,
**caractérisé en ce que**
pour produire l'allure cadencée prédéfinie de la tension de commande (UA) du circuit de commande pour le composant (15), des signaux de commutation respectifs pour commuter le moyen de commutation (20, 25 ; 30, 35) correspondant sont placés aussi bien sur la première sortie (50, 55) de l'unité de commande (70) que sur la deuxième sortie (60, 65) de l'unité de commande (70).
